(19) Europäisches Patentamt
European Patent Office
Office européen des brevets

(11) **EP 2 336 703 B1**

(12) **FASCICULE DE BREVET EUROPEEN**

(45) Date de publication et mention de la délivrance du brevet:
**01.04.2020 Bulletin 2020/14**

(51) Int Cl.:
*F28F 17/00* *(2006.01)*  *F28F 19/00* *(2006.01)*
*B60H 1/32* *(2006.01)*  *F25B 47/00* *(2006.01)*

(21) Numéro de dépôt: **10193901.5**

(22) Date de dépôt: **07.12.2010**

(54) **Système de climatisation comprenant un dispositif de contrôle du givrage d'un échangeur de chaleur constitutif d'une boucle de climatisation**

Klimaanlage mit Reifbildungskontrollvorrichtung auf einem Wärmetauscher

Air conditioning system comprising a system to control freezing of a heat exchanger of an air conditioning loop

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.12.2009 FR 0906085**

(43) Date de publication de la demande:
**22.06.2011 Bulletin 2011/25**

(73) Titulaire: **Valeo Systèmes Thermiques**
**78321 Le Mesnil Saint Denis (FR)**

(72) Inventeur: **Liu, Jin-Ming**
**78770 Conflans Saint Honorine (FR)**

(74) Mandataire: **Metz, Gaëlle et al**
**Valeo Systèmes Thermiques**
**8, rue Louis Lormand**
**CS 80517 La Verrière**
**78322 Le Mesnil Saint Denis Cedex (FR)**

(56) Documents cités:
GB-A- 2 235 790  US-A1- 2004 134 207
US-A1- 2007 289 318  US-B1- 6 330 909

**Description**

**Domaine technique de l'invention.**

L'invention est du domaine des installations de ventilation, de chauffage et/ou de climatisation d'un véhicule automobile. Elle a
pour objet un système de climatisation selon le préambule de la revendication 1 comprenant un dispositif de contrôle du givrage d'un échangeur de chaleur fluide réfrigérant / air ambiant constitutif dudit système. US 2007/0289318 divulgue un tel système de climatisation. Elle a aussi pour objet une méthode pour la mise en œuvre d'un tel système.

**Etat de la technique.**

Un véhicule automobile est couramment équipé d'un système de climatisation pour modifier les paramètres aérothermiques de l'air contenu à l'intérieur de l'habitacle du véhicule. Une telle modification est obtenue à partir de la délivrance d'un flux d'air intérieur dans l'habitacle.

A cet effet, le système de climatisation comprend une installation de ventilation, de chauffage et/ou de climatisation qui canalise la circulation du flux d'air intérieur préalablement à la délivrance de ce dernier dans l'habitacle. L'installation est principalement constituée d'un boîtier réalisé en matière plastique et logé sous une planche de bord du véhicule.

Pour modifier la température du flux d'air intérieur préalablement à sa délivrance dans l'habitacle, le système de climatisation comprend une boucle de climatisation à l'intérieur de laquelle circule un fluide réfrigérant. La boucle de climatisation comprend un compresseur pour comprimer le fluide réfrigérant et un échangeur de chaleur fluide réfrigérant / air ambiant pour permettre un échange de chaleur entre le fluide réfrigérant et un flux d'air ambiant. Ce dernier est plus particulièrement un flux d'air extérieur au véhicule qui est distinct du flux d'air intérieur. L'échangeur de chaleur fluide réfrigérant / air ambiant est placé à l'avant du véhicule pour faciliter un tel échange de chaleur. La boucle de climatisation comprend aussi au moins un organe de détente pour permettre une détente du fluide réfrigérant, un échangeur thermique et, optionnellement, un accumulateur de fluide réfrigérant pour empêcher une admission d'un reliquat de fluide réfrigérant à l'état liquide à l'intérieur du compresseur. L'échangeur thermique est logé à l'intérieur du boîtier pour permettre un transfert de chaleur entre le fluide réfrigérant et le flux d'air intérieur.

La boucle de climatisation est agencée de manière à être configurée soit en mode climatisation, soit en mode chauffage. En mode climatisation l'échangeur thermique se comporte comme un évaporateur et refroidit le flux d'air intérieur tandis qu'en mode chauffage, l'échangeur thermique agit comme un radiateur et réchauffe le flux d'air intérieur.

En mode chauffage, l'échangeur de chaleur fluide réfrigérant / air ambiant se comporte comme un évaporateur. Autrement dit, au cours du cheminement du fluide réfrigérant à l'intérieur de l'échangeur de chaleur fluide réfrigérant / air ambiant, le fluide réfrigérant capte de la chaleur au flux d'air ambiant. Ainsi, au fur et à mesure de ce cheminement, le fluide réfrigérant tend à se réchauffer. Néanmoins, il est courant qu'une surface externe de l'échangeur de chaleur fluide réfrigérant / air ambiant se recouvre de givre. Un tel recouvrement s'avère préjudiciable car il freine, voire empêche un passage du flux d'air ambiant au travers de l'échangeur de chaleur fluide réfrigérant / air ambiant. Il en résulte un amoindrissement de l'échange de chaleur entre le fluide réfrigérant et le flux d'air ambiant. Il en découle finalement une diminution des performances thermiques de la boucle de climatisation, ce qu'il convient d'éviter.

Il est donc souhaitable de déterminer l'état de la surface externe de l'échangeur de chaleur fluide réfrigérant / air ambiant pour prendre éventuellement les mesures nécessaires au dégivrage dudit échangeur de chaleur. Le document US 2002/0036080 (Itoh et al) propose d'équiper le système de climatisation d'un dispositif de contrôle du givrage de la surface externe dudit échangeur de chaleur. Un tel dispositif comprend un premier capteur de température destiné à mesurer la température de l'air ambiant et un deuxième capteur de température destiné à mesurer la température du fluide réfrigérant en sortie de l'échangeur de chaleur fluide réfrigérant / air ambiant. Le dispositif comprend également des moyens de calcul pour déterminer une différence entre ces deux températures et en déduire une information relative à une présence ou une absence de givre sur la surface externe de l'échangeur de chaleur fluide réfrigérant / air ambiant.

Il s'avère qu'un tel système mérite d'être amélioré au regard de la fiabilité et de la précision de l'information relative à l'état de givrage de la surface externe de l'échangeur de chaleur fluide réfrigérant / air ambiant. Plus particulièrement, un tel système n'est pas adapté pour contrôler précisément et de manière fiable l'état de givrage d'un échangeur de chaleur fluide réfrigérant / air ambiant à deux passes, tel que celui décrit par le document FR 2,928,448 (VALEO SYSTEMES THERMIQUES). Dans sa généralité, un échangeur à deux passes permet au fluide réfrigérant d'effectuer deux passages successifs entre deux boîtes collectrices de fluide réfrigérant. Les boîtes collectrices sont disposées en vis-à-vis l'une de l'autre à l'intérieur d'un plan frontal de l'échangeur de chaleur fluide réfrigérant / air ambiant qui est orthogonal à une direction de circulation du flux d'air ambiant. Un tel échangeur de chaleur est principalement constitué de tubes disposés parallèlement entre eux et interposés entre une première boîte collectrice et une deuxième boîte collectrice de fluide réfrigérant. La première boîte collectrice est divisée en une chambre d'entrée et une chambre de sortie. La chambre d'entrée est pourvue d'un orifice d'entrée du fluide réfrigérant à l'intérieur dudit échangeur de chaleur tandis que la chambre de sortie est équipée d'un orifice de sortie du fluide réfrigérant hors dudit échangeur de chaleur. La chambre d'entrée et la chambre de sortie sont isolées l'une de l'autre par l'intermédiaire d'un élément de séparation qui interdit un passage du fluide réfrigérant d'une chambre à l'autre.

**Objet de l'invention.**

Le but de la présente invention est de proposer un système de climatisation comprenant un dispositif de contrôle du givrage d'un échangeur de chaleur fluide réfrigérant / air ambiant qui fournit une information relative à l'état de givrage d'une surface externe de ce dernier, cette information étant précise et fiable pour permettre un fonctionnement optimisé du système de climatisation. Un autre but de la présente invention est de proposer une méthode simple pour la mise en œuvre d'un tel système.

Un système de climatisation de la présente invention comporte les caractéristiques de la revendication 1 qui sont séparés les uns des autres par une ligne de séparation.

La distance X1,X2 est avantageusement inférieure à 40% de la largeur L1,L2 de la passe P1,P2.

Selon une première variante, la distance X1,X2 est égale à 33% de la largeur L1,L2 de la passe P1,P2.

Selon une deuxième variante, la distance X1,X2 est égale à 20% de la largeur L1,L2 de la passe P1,P2.

Selon un aspect de la première variante, le premier capteur de température 20 est disposé en vis-à-vis de la deuxième passe P2.

Selon un aspect de la deuxième variante, le premier capteur de température 20 est disposé en vis-à-vis de la première passe P1.

Le premier capteur de température est par exemple disposé à une distance Y1 de la première boîte collectrice qui est supérieure à 20% de la longueur L des tubes.

La distance Y1 est notamment égale à 63% de la longueur L des tubes.

Le premier capteur de température est par exemple disposé à une distance Y2 de la deuxième boîte collectrice qui est supérieure à 25% de la longueur L des tubes.

La distance Y2 est notamment égale à 63% de la longueur L des tubes.

Selon une autre approche de la présente invention, ledit dispositif comprend préférentiellement un deuxième capteur de température disposé en une deuxième zone Z2 qui est située en aval de l'une des passes P1,P2 selon le sens d'écoulement du flux d'air ambiant à travers l'échangeur de chaleur fluide réfrigérant / air ambiant.

La deuxième zone Z2 s'étend par exemple depuis la première boîte collectrice jusqu'à la deuxième boîte collectrice, la deuxième zone Z2 jouxtant un premier bord latéral dudit échangeur de chaleur et la deuxième zone Z2 étant d'une largeur XR égale à 60% de la largeur L1 de la première passe P1.

Le deuxième capteur de température est notamment placé à une distance X3 du premier bord latéral qui équivaut à 30% de la largeur L1 de la première passe P1.

La deuxième zone Z2 s'étend par exemple encore entre la ligne de séparation et un deuxième bord latéral dudit échangeur de chaleur, la deuxième zone Z2 jouxtant la deuxième boîte collectrice et la deuxième zone Z2 étant d'une longueur YR égale à 25% de la longueur L des tubes.

Le deuxième capteur de température est notamment placé à une distance Y3 de la deuxième boîte collectrice qui équivaut à 12,5% de la longueur L des tubes.

Une méthode de la présente invention est une méthode pour déterminer un état de givrage d'une surface externe de l'échangeur de chaleur fluide réfrigérant / air ambiant constitutif d'un tel système de climatisation. La méthode comporte une première étape consistant à mesurer une première température $T_1$ du flux d'air ambiant prise en aval de l'échangeur de chaleur fluide réfrigérant / air ambiant selon le sens d'écoulement du flux d'air ambiant à travers l'échangeur de chaleur fluide réfrigérant / air ambiant.

Selon une première variante, la méthode comporte une deuxième étape consistant à déduire de ladite température $T_1$ du flux d'air ambiant une enthalpie $E_1$ du flux d'air ambiant en aval dudit échangeur de chaleur selon le sens d'écoulement du flux d'air ambiant à travers ledit échangeur de chaleur, pour déterminer une puissance de chauffage $P_{ch}$ de la boucle de climatisation à partir de la relation [1] :

$$P_{ch} = P_{comp}*R_{comp} + R_0*S*V*(E_0 - E_1) \qquad [1]$$

Dans laquelle :

- $P_{comp}$ est une puissance électrique du compresseur.
- $R_{comp}$ est un rendement du compresseur.
- $R_0$ est la densité de l'air.

- S est une surface frontale dudit échangeur de chaleur.
- V est une vitesse du flux d'air ambiant s'écoulant à travers ledit échangeur de chaleur.
- $E_0$ est une enthalpie du flux d'air ambiant en amont dudit échangeur de chaleur selon un sens d'écoulement du flux d'air ambiant à travers ledit échangeur de chaleur.

Selon une première possibilité, la méthode comporte une troisième étape consistant à :

- comparer la puissance de chauffage $P_{ch}$ et une puissance de consigne $P_{cons}$,
- en déduire que ladite surface externe est givrée si la relation [2] est vérifiée pendant au moins une première durée seuil $D_{seuil1}$.

$$P_{ch} > P_{cons} + \varepsilon_1 \qquad [2]$$

Dans laquelle :

- $\varepsilon_1$ est une première tolérance.

Selon une deuxième possibilité, la méthode comporte les étapes successives consistant à :

- calculer une température de saturation $T_{sat}$ du fluide réfrigérant $\underline{FR}$ qui correspond à la puissance de chauffage $P_{ch}$ à partir de la relation [3]

$$T_{sat} = T_{ech} + P_{ch} * (1 + K*(2*Q_{air}*Cp_{air})) / K \qquad [3]$$

Dans laquelle :

- $T_{ech}$ est une température du flux d'air ambiant en amont dudit échangeur de chaleur selon le sens d'écoulement du flux d'air ambiant à travers ledit échangeur de chaleur.
- K est une constante,
- $Q_{air}$ est un débit du flux d'air ambiant traversant ledit échangeur de chaleur,
- $Cp_{air}$ est une chaleur massique de l'air à pression constante.

- calculer une température de saturation $T_{sat\_ch}$ du fluide réfrigérant $\underline{FR}$ qui correspond à ladite puissance de consigne $P_{cons}$ à partir de la relation [4] :

$$T_{sat-ch} = T_{ech} + P_{cons} * (1 + K*(2*Q_{air}*Cp_{air})) / K \qquad [4]$$

- comparer $T_{sat}$ et $T_{sat\_ch}$,

- en déduire que ladite surface externe est givrée si la relation [5] est vérifiée pendant au moins une deuxième durée seuil $D_{seuil2}$.

$$T_{sat\_th} > T_{sat\_ch} + \varepsilon_2 \qquad [5]$$

Dans laquelle :

- $\varepsilon_2$ est une deuxième tolérance.

Selon une troisième possibilité, a méthode comporte les étapes successives consistant à :

- calculer une surface frontale estimée $S_{est}$ dudit échangeur de chaleur à partir de la relation [6] :

$$S_{est} = (P_{th} - P_{comp}*R_{comp}) / (R_o*V*(E_0 - E_1)) \qquad [6]$$

- comparer la surface frontale estimée $S_{est}$ à la surface frontale S dudit échangeur de chaleur,
- déduire que ladite surface externe est givrée si la surface frontale estimée $S_{est}$ est inférieure à la surface frontale S pendant au moins une troisième durée seuil $D_{seuil3}$.

Selon une quatrième possibilité, la méthode comporte les étapes successives consistant à :

- calculer une puissance estimée du compresseur $P_{compEst}$ à partir de la relation [6] :

$$P_{compEst} = (P_{cons} - S*R_o*V*(E_0 - E_1)) / R_{comp} \qquad [6]$$

- comparer la puissance estimée du compresseur $P_{compEst}$ à une puissance réelle du compresseur $P_{compReel}$ mesurée.
- déduire que ladite surface externe est givrée si $P_{compEst}$ est supérieure à $P_{compReel}$ pendant au moins une quatrième durée seuil $D_{seuil4}$ supérieure.

Selon une deuxième variante, la méthode comporte une deuxième étape consistant à mesurer une deuxième température $T_2$ du flux d'air ambiant prise en aval de l'échangeur de chaleur fluide réfrigérant / air ambiant selon le sens d'écoulement du flux d'air ambiant à travers l'échangeur de chaleur fluide réfrigérant / air ambiant.
La méthode comporte avantageusement une troisième étape consistant à calculer une différence $\Delta$ entre la température $T_1$ et la température $T_2$, puis en déduire que la surface externe de l'échangeur de chaleur fluide réfrigérant / air ambiant est givrée si la différence $\Delta$ est supérieure à une valeur seuil $\Delta_{seuil}$ pendant au moins une cinquième durée seuil $D_{seuil5}$.

## Description des figures.

La présente invention sera mieux comprise à la lecture de la description qui va en être faite d'exemples de réalisation, en relation avec les figures des planches annexées, dans lesquelles :

La fig.1 est une vue schématique d'un système de climatisation selon la présente invention.
Les fig.2 à fig.7 sont des vues schématiques de face d'un échangeur de chaleur fluide réfrigérant / air ambiant constitutif du système de climatisation représenté sur la figure précédente.

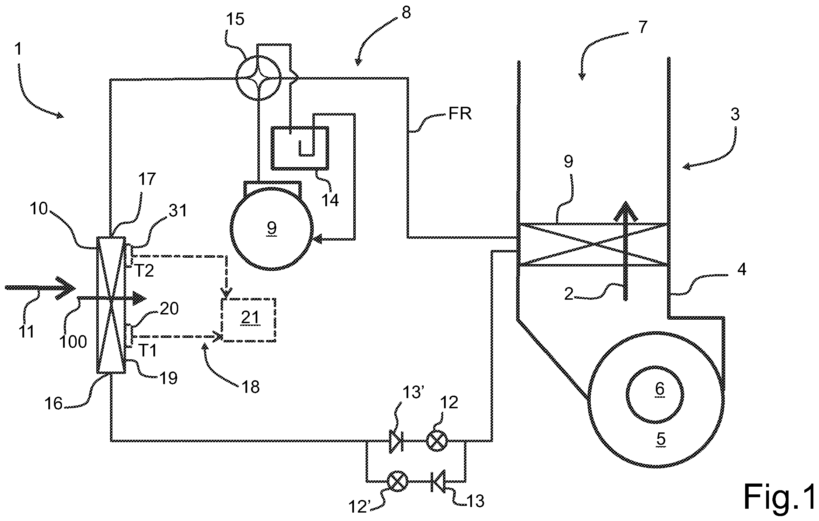

Sur la fig.1, un véhicule automobile est équipé d'un système de climatisation 1 pour modifier la température de l'air contenu à l'intérieur de l'habitacle du véhicule. Cette modification est obtenue à partir de la délivrance d'un flux d'air intérieur 2 dans l'habitacle.
Le système de climatisation 1 comprend une installation de ventilation, de chauffage et/ ou de climatisation 3 qui canalise la circulation du flux d'air intérieur 2 préalablement à sa délivrance à l'intérieur de l'habitacle. L'installation 3 est principalement constituée d'un boîtier 4 réalisé en matière plastique et disposé sous une planche de bord du véhicule. L'installation 3 loge un pulseur 5 pour faire circuler le flux d'air intérieur 2 depuis une bouche d'admission d'air 6 jusqu'à une bouche d'évacuation d'air 7 qui sont ménagées à travers le boîtier 4.
Le système de climatisation 1 comprend également une boucle de climatisation 8 pour modifier la température du flux d'air intérieur 2 préalablement à son évacuation hors du boîtier 4. A cet effet, la boucle de climatisation 8 comprend un échangeur thermique 9 qui est logé à l'intérieur du boîtier 4. L'échangeur thermique 9 permet un transfert thermique entre le flux d'air intérieur 2 et un fluide réfrigérant FR qui circule à l'intérieur de la boucle de climatisation 8. Le fluide réfrigérant FR est par exemple du dioxyde de carbone connu sous la dénomination R744. La boucle de climatisation 8 comprend aussi un compresseur 9 pour comprimer le fluide réfrigérant FR et un échangeur de chaleur fluide réfrigérant / air ambiant 10 qui permet un transfert de chaleur entre le fluide réfrigérant FR et un flux d'air ambiant 11, tel qu'un flux d'air extérieur au véhicule. L'échangeur de chaleur fluide réfrigérant / air ambiant 10 est placé hors du boîtier 4, par exemple à l'avant du véhicule pour faciliter le transfert de chaleur entre le fluide réfrigérant FR et le flux d'air ambiant 11. La boucle de climatisation comprend également deux organes de détente 12,12' pour permettre une détente du fluide réfrigérant FR. Chaque organe de détente 12,12' est associé à un by-pass ou vanne de contournement 13,13' respectif pour autoriser ou interdire un passage du fluide réfrigérant FR à l'intérieur de l'organe de détente 12,12'. La boucle de climatisation 8 comprend encore un accumulateur 14 pour empêcher une admission d'un reliquat de fluide réfrigérant FR à l'état liquide à l'intérieur du compresseur 9. Enfin, la boucle de climatisation 8 comprend une vanne quatre-voies 15 qui est agencé de manière à ce que la boucle de climatisation 8 puisse fonctionner en mode climatisation ou en mode chauffage. En mode chauffage, la vanne quatre-voies 15 permet de faire circuler le fluide réfrigérant depuis le compresseur 8 vers l'échangeur thermique 9 tandis qu'en mode climatisation la vanne quatre-voies 15 est apte à faire circuler le fluide réfrigérant FR depuis le compresseur 8 vers l'échangeur de chaleur fluide réfrigérant / air ambiant 10. Sur la fig.1, le fonctionnement en mode chauffage de la vanne quatre-voies 15 est illustré en trait plein et le fonctionnement en mode climatisation est représenté en trait fin. En mode chauffage, l'échangeur de chaleur fluide réfrigérant / air ambiant 10 se comporte comme un évaporateur. Le flux d'air ambiant 11 qui le traverse est refroidi lors de son passage au travers dudit échangeur de chaleur 10. Parallèlement, le fluide réfrigérant FR se réchauffe au fur et à mesure de son cheminement à l'intérieur dudit échangeur de chaleur 10 entre un orifice d'entrée 16 du fluide réfrigérant FR à l'intérieur dudit échangeur de chaleur 10 et un orifice de sortie 17 du fluide réfrigérant FR hors dudit échangeur de chaleur 10 que ce dernier comporte.

Le système de climatisation 1 comprend un dispositif de contrôle 18 du givrage de l'échangeur de chaleur fluide réfrigérant / air ambiant 10 illustré sur la fig.1 en trait pointillé. Le dispositif de contrôle 18 est apte à déterminer une présence de givre sur une surface externe 19 de l'échangeur de chaleur fluide réfrigérant / air ambiant 10 qui est préjudiciable à un bon échange de chaleur entre le flux d'air ambiant 11 et le fluide réfrigérant FR. Le dispositif de contrôle 18 comprend un premier capteur de température 20 pour mesurer une première température $T_1$ du flux d'air ambiant 11 et une unité électronique de contrôle 21 apte à déduire une présence ou une absence de givre sur la surface externe 19 en fonction de la première température $T_1$. L'unité électronique de contrôle 21 est par exemple l'unité électronique de contrôle du système de climatisation 1 assurant la mise en œuvre de la boucle de climatisation 8.

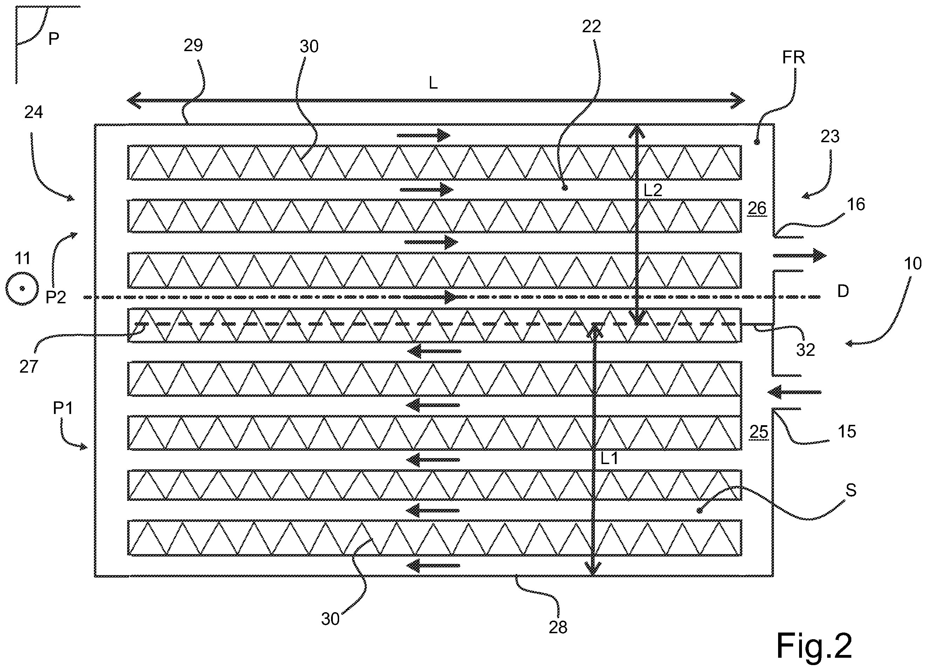

Sur la fig.2, l'échangeur de chaleur fluide réfrigérant / air ambiant 10 est un échangeur à deux passes qui est principalement constitué de tubes 22 de longueur L disposés parallèlement entre eux à l'intérieur d'un plan frontal P dudit échangeur de chaleur 10. Des intercalaires 30 sont interposés entre deux tubes adjacents 22 pour faciliter un échange de chaleur entre le fluide réfrigérant FR et le flux d'air ambiant 11. Ce dernier s'écoule à travers l'échangeur de chaleur fluide réfrigérant / air ambiant 10 orthogonalement au plan frontal P et au plan de la fig.1. Les tubes 22 sont disposés entre une première boîte collectrice 23 et une deuxième boîte collectrice 24. La première boîte collectrice 23 est divisée en une chambre d'entrée 25 et une chambre de sortie 26 qui sont isolées l'une de l'autre par un élément de séparation 32 de manière à ce que le fluide réfrigérant FR ne puisse pas s'écouler directement de l'une des chambres 25,26 à l'autre des chambres 25,26, sans emprunter les tubes 22. La chambre d'entrée 25 est pourvue de l'orifice d'entrée 15 du fluide réfrigérant FR à l'intérieur de l'échangeur de chaleur fluide réfrigérant / air ambiant 10 tandis que la chambre de sortie 26 est équipée de l'orifice de sortie 16 du fluide réfrigérant FR hors de l'échangeur de chaleur fluide réfrigérant / air ambiant 10. L'échangeur de chaleur fluide réfrigérant / air ambiant 10 comporte deux passes P1,P2. Les tubes 22 disposés entre la chambre d'entrée 25 et la deuxième boîte collectrice 24 constituent les tubes 22 d'une première passe P1 tandis que les tubes 22 disposés entre la deuxième boîte collectrice 24 et la chambre de sortie 26 constituent les tubes 22 d'une deuxième passe P2. Ainsi, au cours de son cheminement à l'intérieur de l'échangeur de chaleur fluide réfrigérant / air ambiant 10, le fluide réfrigérant FR pénètre à l'intérieur de la chambre d'entrée 25 par l'intermédiaire de l'orifice d'entrée 15 et circule ensuite à l'intérieur des tubes 22 de la première passe P1. Puis, le fluide réfrigérant FR pénètre à l'intérieur de la deuxième boîte collectrice 24, circule ensuite à l'intérieur des tubes 22 de la deuxième passe P2. Enfin, le fluide réfrigérant FR pénètre à l'intérieur de la chambre de sortie 26 et quitte finalement l'échangeur de chaleur fluide réfrigérant / air ambiant 10 par l'intermédiaire de l'orifice de sortie 16. Il en résulte que le fluide réfrigérant FR effectue à l'intérieur de l'échangeur de chaleur fluide réfrigérant / air ambiant 10 deux passages successifs entre la première boîte collectrice 23 et la deuxième boîte collectrice 24. Ces deux passages successifs à l'intérieur de la première passe P1, puis de la deuxième passe P2 sont réalisés en sens opposés l'un de l'autre.

La première passe P1 et la deuxième passe P2 sont séparées l'une de l'autre par une ligne de séparation 27 qui s'étend entre la première boîte collectrice 23 et la deuxième boîte collectrice 24. La ligne de séparation 27 s'étend orthogonalement entre les boîtes collectrices 23,24 en étant ménagée à l'intérieur du plan frontal P de l'échangeur de chaleur fluide réfrigérant / air ambiant 10. La ligne de séparation 27 est notamment ménagée parallèlement et en continuité de l'élément de séparation 32. Selon diverses variantes de réalisation non représentées, la ligne de séparation 27 est susceptible d'être structurellement constituée d'un tube mort ou d'une plaque de séparation entre un tube de la première passe P1 et un tube de la deuxième passe P2. Selon la variante représentée sur la fig.2, la ligne de séparation 27 est constituée d'une ligne frontière fictive qui est interposée entre deux tubes adjacents 22 dont un tube 22 de la première passe P1 et un tube 22 de la deuxième passe P2. La première passe P1 est d'une largeur L1 prise orthogonalement à une direction D d'extension générale des tubes 22 tandis que la deuxième passe P2 est d'une largeur L2 également prise orthogonalement à une direction D d'extension générale des tubes 22. La largeur L1 est prise entre un premier bord latéral 28 de l'échangeur de chaleur fluide réfrigérant / air ambiant 10 et la ligne de séparation 27 tandis que la largeur L2 est mesurée entre un deuxième bord latéral 29 de l'échangeur de chaleur fluide réfrigérant / air ambiant 10 et la ligne de séparation 27. Le premier bord latéral 28 est un bord libre de la première passe P1 qui s'étend entre la première boîte collectrice 23 et la deuxième boîte collectrice 24. Le deuxième bord latéral 29 est un bord libre de la deuxième passe P2 qui s'étend entre la première boîte collectrice 23 et la deuxième boîte collectrice 24.

Selon une première approche de la présente invention, et pour optimiser la fiabilité du dispositif de contrôle 18 et finalement améliorer les performances thermiques du système de climatisation 1 comprenant un tel échangeur de chaleur fluide réfrigérant / air ambiant 10 à deux passes, la présente invention propose de disposer le premier capteur de température 20 en aval de l'échangeur de chaleur fluide réfrigérant / air ambiant 10 selon un sens d'écoulement 100

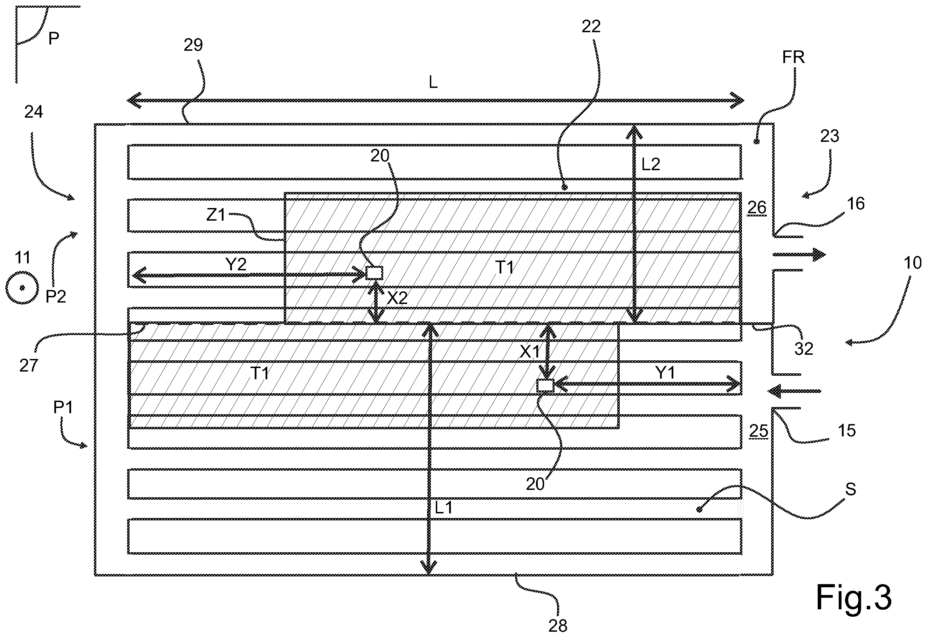

du flux d'air ambiant 11 à travers l'échangeur de chaleur fluide réfrigérant / air ambiant 10. Plus particulièrement, la présente invention propose avantageusement de disposer le premier capteur de température 20 en une première zone Z1 de l'échangeur de chaleur fluide réfrigérant / air ambiant 10 qui est représentée en hachure sur la fig.3. Il s'avère en effet qu'en plaçant le premier capteur de température 20 à l'intérieur de la première zone Z1, la précision et la fiabilité de l'information relative à l'état de givrage de la surface externe 19 de l'échangeur de chaleur fluide réfrigérant / air ambiant 10 est fortement améliorée. La présente invention porte sur la définition de la première zone Z1 et est donc avantageuse pour le système de climatisation 1 tel que défini précédemment mais trouve aussi sa pertinence pour un système de climatisation différent de celui-ci, à partir du moment où ce système de climatisation comprend un dispositif de contrôle du givrage d'un échangeur de chaleur fluide réfrigérant / air ambiant à deux passes.

Sur la fig.3, la première zone Z1 comprend des points du plan frontal P situés en vis-à-vis des tubes 22 ou des intercalaires 30 et situés à une distance X1,X2 de la ligne de séparation 27 qui est inférieure à 66% de la largeur respective L1,L2 de la passe P1,P2 en vis-à-vis de laquelle le premier capteur de température 20 est disposé.

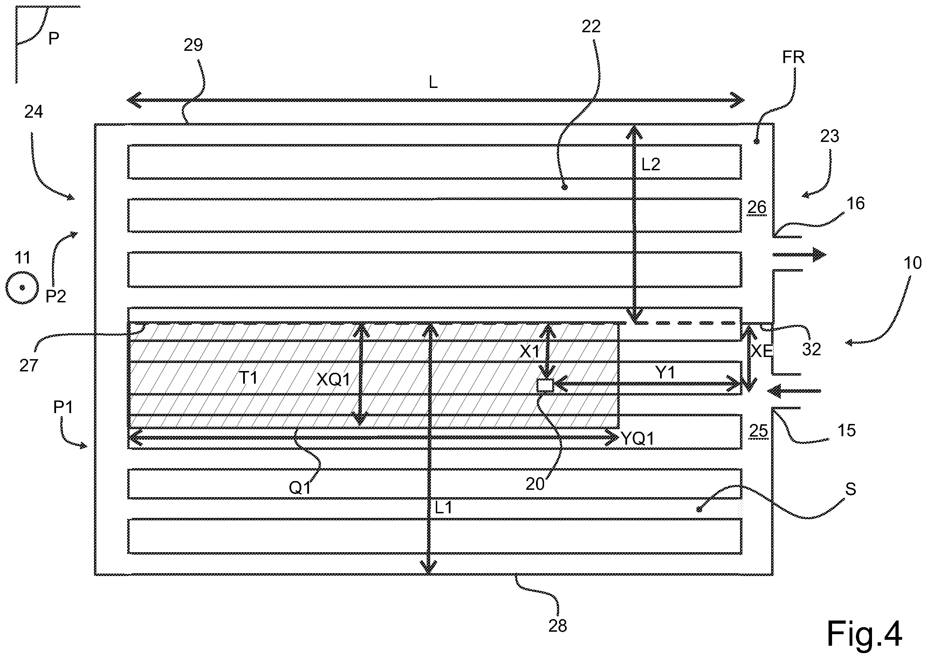

Ainsi, selon une première variante illustrée sur la fig.4 dans laquelle le capteur de température 20 est disposé en vis-à-vis de la première passe P1, le capteur de température 20 est placé à la distance X1 qui est inférieure à 66% de la largeur L1 de la première passe P1. Préférentiellement, la distance X1 est inférieure à 40% de la largeur L1 de la première passe P1. Préférentiellement encore, la distance X1 est de l'ordre de 20% de la largeur L1 de la première passe P1.

Par ailleurs, le premier capteur de température 20 est disposé à une distance Y1 de la première boîte collectrice 23 qui est supérieure à 20% de la longueur L des tubes 22. Préférentiellement, la distance Y1 est égale à 63% de la longueur L des tubes 22.

Autrement dit, selon une forme de réalisation de la première variante, la première zone Z1 est constituée d'un premier quadrilatère Q1 délimité par la ligne de séparation 27 et la deuxième boîte collectrice 24, le premier quadrilatère Q1 étant d'une largeur XQ1 égale à 40% de la largeur L1 de la première passe P1 et d'une longueur YQ1 égale à 80% de la longueur L des tubes 22. L'orifice d'entrée 15 est ménagé à travers la chambre d'entrée 25 à une distance XE de la ligne de séparation 27 qui est inférieure à la distance XQ1.

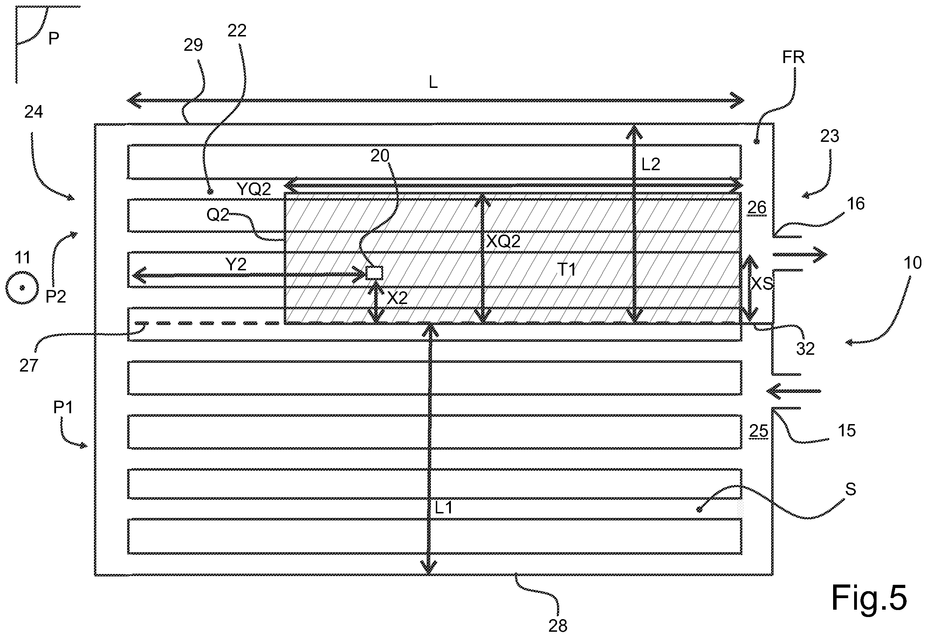

Selon une deuxième variante illustrée sur la fig.5 dans laquelle le capteur de température 20 est disposé en vis-à-vis de la deuxième passe P2, le capteur de température est placée à la distance X2 qui est inférieure à 66% de la largeur L2 de la première passe P2. Préférentiellement, la distance X2 est de l'ordre de 33% de la largeur L2 de la deuxième passe P2.

Par ailleurs, le premier capteur de température 20 est disposé à une distance Y2 de la deuxième boîte collectrice 24 qui est supérieure à 25% de la longueur L des tubes 22. Préférentiellement, la distance Y2 est égale à 63% de la longueur L des tubes 22.

Autrement dit, selon une forme de réalisation de la deuxième variante, la première zone Z1 est constituée d'un deuxième quadrilatère Q2 délimité par la ligne de séparation 27 et la première boîte collectrice 23, le deuxième quadrilatère Q2 étant d'une largeur XQ2 égale à 66% de la largeur L2 de la deuxième passe P2 et d'une longueur YQ2 égale à 75% de la longueur L des tubes 22. L'orifice de sortie 16 est ménagé à travers la chambre de sortie 26 à une distance XS de la ligne de séparation 27 qui est inférieure à la distance XQ2.

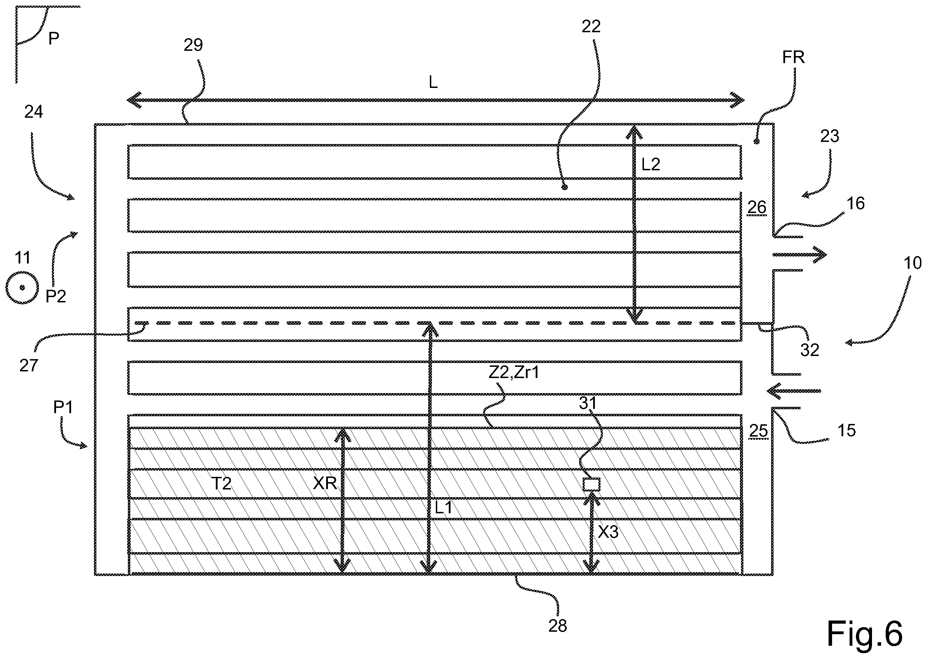

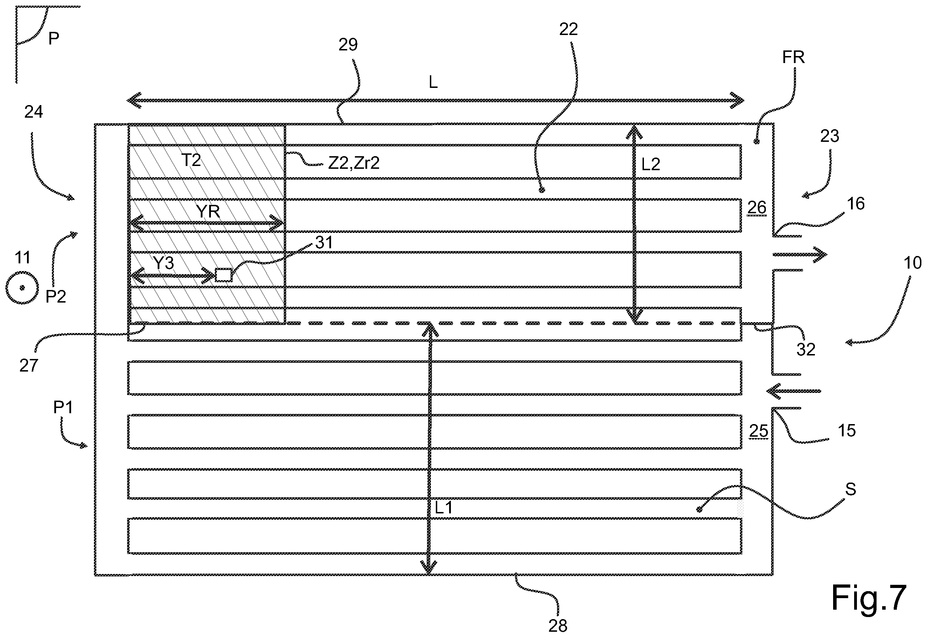

Selon une deuxième approche de la présente invention illustrée sur les fig.6 et fig.7, la présente invention propose que le dispositif de contrôle 18 comprenne un deuxième capteur de température 31 pour mesurer une deuxième température Ta2 du flux d'air ambiant 11, le deuxième capteur de température 31 étant disposé en aval de l'échangeur de chaleur fluide réfrigérant / air ambiant 10 selon le sens d'écoulement 100 du flux d'air ambiant 11 à travers l'échangeur de chaleur fluide réfrigérant / air ambiant 10. Plus particulièrement, la présente invention propose avantageusement de disposer le deuxième capteur de température 31 en une deuxième zone Z2 située en vis-à-vis de l'une des passes P1,P2.

Sur les fig.6 et fig.7, la deuxième zone Z2 des points du plan frontal P situés en vis-à-vis des tubes 22 ou des intercalaires 30. La deuxième zone Z2 est constituée de deux zones rectangulaires Zr1,Zr2 qui ne comportent aucun point commun avec la première zone Z1.

Sur la fig.6 et selon une première forme de réalisation, la deuxième zone Z2 est constituée d'une première zone rectangulaire Zr1 qui s'étend depuis la première boîte collectrice 23 jusqu'à la deuxième boîte collectrice 24. La première zone rectangulaire Zr1 est bordée par le premier bord latéral 28 dudit échangeur de chaleur 10. La première zone rectangulaire Zr1 est d'une largeur XR qui est égale à 60% de la largeur L1 de la première passe P1. Préférentiellement, le deuxième capteur de température 31 est placé à une distance X3 du premier bord latéral 28 qui équivaut à 30% de la largeur L1 de la première passe P1.

Sur la fig.7 et selon une deuxième forme de réalisation, la deuxième zone Z2 est constituée d'une deuxième zone rectangulaire Zr2 qui s'étend entre la ligne de séparation 27 et le deuxième bord latéral 29 dudit échangeur de chaleur 10. La deuxième zone rectangulaire Zr2 est bordée par la deuxième boîte collectrice 24. La deuxième zone rectangulaire Zr2 est d'une longueur YR égale à 25% de la longueur L des tubes. Préférentiellement, le deuxième capteur de température 31 est placé à une distance Y3 de la deuxième boîte collectrice 24 qui équivaut à 12,5% de la longueur L des tubes.

Il résulte finalement de ces dispositions que le premier capteur de température 20 est disposé à l'intérieur de la première zone Z1, c'est-à-dire soit du premier quadrilatère Q1, soit du deuxième quadrilatère Q2. Il apparaît que la première zone Z1 est aussi définissable par le fait qu'il s'agit de la zone de la surface externe 19 de l'échangeur de chaleur fluide réfrigérant / air ambiant 10 qui givre le plus tardivement. Quelque soit la position du premier capteur de température 20, le deuxième capteur de température 31 est disposé à l'intérieur de la deuxième zone Z2, c'est-à-dire soit due la première zone rectangulaire Zr1, soit de la deuxième zone rectangulaire Zr2. Il apparaît que la deuxième zone Z2 est aussi définissable par le fait qu'il s'agit de la zone de la surface externe 19 de l'échangeur de chaleur fluide réfrigérant / air ambiant 10 qui givre le plus précocement.

Ces dispositions sont telles qu'une méthode pour la mise en œuvre d'un tel système de climatisation 1 comporte une première étape consistant à mesurer une première température $T_1$ du flux d'air ambiant 11 qui est prise en aval de l'échangeur de chaleur fluide réfrigérant / air ambiant 10 selon le sens d'écoulement 100 du flux d'air ambiant 11 à travers l'échangeur de chaleur fluide réfrigérant / air ambiant 10. La méthode de la présente invention peut ensuite relever de deux variantes différentes, une première variante pouvant comporter quatre formes de réalisation distinctes.

Selon la première variante, la méthode comporte une deuxième étape consistant à déduire de ladite température $T_1$ du flux d'air ambiant 11 une enthalpie $E_1$ du flux d'air ambiant 11 en aval dudit échangeur de chaleur 10 selon le sens d'écoulement 100 du flux d'air ambiant 11 à travers ledit échangeur de chaleur 10. Puis la méthode propose de déterminer une puissance de chauffage $P_{ch}$ de la boucle de climatisation 8 à partir de la relation [1] :

$$P_{ch} = P_{comp}*R_{comp} + R_0*S*V*(E_0 - E_1) \qquad [1]$$

Dans laquelle :

- $P_{comp}$ est une puissance électrique du compresseur 9.
- $R_{comp}$ est un rendement du compresseur 9. Dans le cas où le compresseur est de type mécanique, $R_{comp}$ vérifie la relation $R_{comp} = 1$.
- $R_0$ est la densité de l'air.
- S est une surface frontale dudit échangeur de chaleur 10 qui est traversée par le flux d'air ambiant 11.
- V est une vitesse du flux d'air ambiant 11 s'écoulant à travers ledit échangeur de chaleur 10.
- $E_0$ est une enthalpie du flux d'air ambiant 11 en amont dudit échangeur de chaleur 10 selon le sens d'écoulement du flux d'air ambiant 11 à travers ledit échangeur de chaleur 10.

Selon une première forme de réalisation, la méthode comporte ensuite une troisième étape consistant à :

- comparer la puissance de chauffage $P_{ch}$ et une puissance de consigne $P_{cons}$,
- en déduire que ladite surface externe 19 est givrée si la relation [2] est vérifiée pendant au moins une première durée seuil $D_{seuil1}$.

$$P_{ch} > P_{cons} + \varepsilon_1 \qquad [2]$$

Dans laquelle :

- $\varepsilon_1$ est une première tolérance.
  A titre d'exemple, la première durée seuil $D_{seuil1}$ est de l'ordre de cinq minutes et la première tolérance $\varepsilon_1$ est de l'ordre de 1 kW.

Autrement dit, la première forme de réalisation s'appuie sur l'idée que lorsque la surface externe 19 givre, la valeur de la surface frontale S tend à diminuer, le givre formant obstacle au passage du flux d'air ambiant 11 au travers dudit échangeur de chaleur 10. Pour atteindre la puissance de consigne $P_{cons}$, la puissance électrique du compresseur $P_{comp}$ augmente. Autrement dit, l'augmentation du premier terme de la relation [1] tend à compenser la diminution du deuxième terme de la relation [1]. Il en résulte que la puissance de chauffage $P_{ch}$ estimée (c'est-à-dire celle calculée à partir de la relation [1] en considérant la surface externe 19 comme non givrée) tend à être supérieure à la puissance de consigne $P_{cons}$. On en déduit alors que la surface externe 19 est givrée.

Selon une deuxième forme de réalisation, la méthode comporte ensuite les étapes successives consistant à :

- calculer une température de saturation $T_{sat}$ du fluide réfrigérant FR qui correspond à la puissance de chauffage $P_{ch}$ à partir de la relation [3]

$$T_{sat} = T_{ech} + P_{ch} * (1 + K*(2*Q_{air}*Cp_{air})) / K \qquad [3]$$

Dans laquelle :

- $T_{ech}$ est une température du flux d'air ambiant 11 en amont dudit échangeur de chaleur 10 selon le sens d'écoulement 100 du flux d'air ambiant 11 à travers ledit échangeur de chaleur 10. $T_{ech}$ est par exemple mesurée par un thermomètre prévu pour connaître la température extérieur au véhicule. $T_{ech}$ est encore susceptible d'être estimée à partir d'autres données disponibles sur le véhicule.
- K est une constante,
- $Q_{air}$ est un débit du flux d'air ambiant 11 traversant ledit échangeur de chaleur 10,
- $Cp_{air}$ est une chaleur massique de l'air à pression constante.

- calculer une température de saturation $T_{sat\_ch}$ du fluide réfrigérant FR qui correspond à ladite puissance de consigne $P_{cons}$ à partir de la relation [4] :

$$T_{sat-ch} = T_{ech} + P_{cons} * (1 + K*(2*Q_{air}*Cp_{air})) / K \qquad [4]$$

- comparer $T_{sat}$ et $T_{sat\_ch}$,
- en déduire que ladite surface externe 19 est givrée si la relation [5] est vérifiée pendant au moins une deuxième durée seuil $D_{seuil2}$.

$$T_{sat\_th} > T_{sat\_ch} + \varepsilon_2 \qquad [5]$$

Dans laquelle :

- $\varepsilon_2$ est une deuxième tolérance.

A titre d'exemple, la deuxième durée seuil $D_{seuil2}$ est de l'ordre de cinq minutes et la deuxième tolérance $\varepsilon_2$ est de l'ordre de 1 kW.

De manière équivalente à cette forme de réalisation, on peut aussi calculer une valeur de pression de saturation $P_{sat\_th}$ du fluide réfrigérant FR équivalente à $T_{sat\_th}$ et une valeur de pression de saturation $P_{sat\_ch}$ du fluide réfrigérant FR équivalente à $T_{sat\_ch}$. Il convient ensuite de procéder à une comparaison équivalente à celle de la relation [5].
Selon une troisième forme de réalisation, la méthode comporte les étapes successives consistant à :

- calculer une surface frontale estimée $S_{est}$ dudit échangeur de chaleur 10 à partir de la relation [6] :

$$S_{est} = (P_{th} - P_{comp}*R_{comp}) / (R_o*V*(E_0 - E_1)) \qquad [6]$$

- comparer la surface frontale estimée $S_{est}$ à la surface frontale S dudit échangeur de chaleur (10),
- déduire que ladite surface externe 19 est givrée si la surface frontale estimée $S_{est}$ est inférieure à la surface frontale S pendant au moins une troisième durée seuil $D_{seuil3}$. A titre d'exemple, la troisième durée seuil $D_{seuil3}$ est de l'ordre de cinq minutes.

Selon une quatrième forme de réalisation, la méthode comporte les étapes successives consistant à :

- calculer une puissance estimée du compresseur $P_{compEst}$ à partir de la relation [6] :

$$P_{compEst} = (P_{cons} - S*R_o*V*(E_0 - E_1)) / R_{comp} \qquad [6]$$

- comparer la puissance estimée du compresseur $P_{compEst}$ à une puissance réelle du compresseur $P_{compReel}$ mesurée.
- déduire que ladite surface externe 19 est givrée si $P_{compEst}$ est supérieure à $P_{compReel}$ pendant au moins une

quatrième durée seuil $D_{seuil4}$ supérieure. A titre d'exemple, la quatrième durée seuil $D_{seuil4}$ est de l'ordre de cinq minutes.

Selon une deuxième variante de réalisation, la méthode comporte une deuxième étape consistant à mesurer une deuxième température $T_2$ du flux d'air ambiant 11 qui est prise en aval de l'échangeur de chaleur fluide réfrigérant / air ambiant 10 selon le sens d'écoulement 100 du flux d'air ambiant 11 à travers l'échangeur de chaleur fluide réfrigérant / air ambiant 10.

La méthode comporte ensuite une troisième étape consistant à calculer une différence $\Delta$ entre la température $T_1$ et la température $T_2$, puis en déduire que la surface externe 19 de l'échangeur de chaleur fluide réfrigérant / air ambiant 10 est givrée si la différence $\Delta$ est supérieure à une valeur seuil $\Delta_{seuil}$ pendant au moins une cinquième durée seuil $D_{seuil5}$. A titre d'exemple, la cinquième durée seuil $D_{seuil5}$ est de l'ordre de cinq minutes.

## Revendications

1. Système de climatisation (1) comprenant une installation de chauffage et/ou de climatisation (3) principalement constituée d'un boiter (4) et comprenant une boucle de climatisation (8), la boucle de climatisation (8) comprenant un échangeur thermique (9) situé à l'intérieur du boitier (4) permettant un transfert thermique entre un flux d'air intérieur (2) et un fluide réfrigérant (FR) qui circule à l'intérieur de la boucle de climatisation (8), un échangeur de chaleur fluide réfrigérant/air ambiant (10) qui permet un transfert de chaleur entre le fluide réfrigérant (FR) et un flux d'air ambiant (11) tel qu'un flux d'air extérieur au véhicule, l'échangeur de chaleur (10) étant placé hors du boitier (4) par exemple à l'avant du véhicule, le système de climatisation (1) comprenant un dispositif de contrôle (18) du givrage d'un échangeur de chaleur fluide réfrigérant / air ambiant (10), ledit échangeur de chaleur (10) comportant deux passes P1,P2 qui est constitutif d'une boucle de climatisation (8), ledit échangeur de chaleur (10) comportant des tubes (22) d'une longueur L qui sont interposés entre une première boîte collectrice (23) et une deuxième boîte collectrice (24), les tubes (22) étant répartis en des tubes (22) d'une première passe P1 et des tubes (22) d'une deuxième passe P2 qui sont séparés les uns des autres par une ligne de séparation (27), ledit dispositif (18) comprenant un premier capteur de température (20) qui est disposé en une première zone Z1 située en vis-à-vis de l'une des passes P1,P2, le premier capteur de température (20) étant placé à une distance X1,X2 de la ligne de séparation (27), **caractérisé en ce que** la distance X1,X2 est inférieure à 66% d'une largeur respective L1,L2 de la passe P1,P2, le premier capteur de température (20) étant disposé en aval de l'échangeur de chaleur fluide réfrigérant / air ambiant (10) selon un sens d'écoulement (100) d'un flux d'air ambiant (11) à travers l'échangeur de chaleur fluide réfrigérant / air ambiant (10).

2. Système de climatisation (1) selon la revendication précédente, **caractérisé en ce que** la distance X1,X2 est inférieure à 40% de la largeur L1,L2 de la passe P1,P2.

3. Système de climatisation (1) selon l'une quelconque des revendications précédentes, **caractérisé en ce que** la distance X1,X2 est égale à 33% de la largeur L1,L2 de la passe P1,P2.

4. Système de climatisation (1) selon l'une quelconque des revendications précédentes, **caractérisé en ce que** la distance X1,X2 est égale à 20% de la largeur L1,L2 de la passe P1,P2.

5. Système de climatisation (1) selon l'une quelconque des revendications 1 à 3, **caractérisé en ce que** le premier capteur de température (20) est disposé en vis-à-vis de la deuxième passe P2.

6. Système de climatisation (1) selon l'une quelconque des revendications 1 à 4, **caractérisé en ce que** le premier capteur de température (20) est disposé en vis-à-vis de la première passe P1.

7. Système de climatisation (1) selon l'une quelconque des revendications 1 à 4 et selon la revendication 6, **caractérisé en ce que** le premier capteur de température (20) est disposé à une distance Y1 de la première boîte collectrice (23) qui est supérieure à 20% de la longueur L des tubes (22).

8. Système de climatisation (1) selon la revendication 7, **caractérisé en ce que** la distance Y1 est égale à 63% de la longueur L des tubes (22).

9. Système de climatisation (1) selon l'une quelconque des revendications 1 à 5, **caractérisé en ce que** le premier capteur de température (20) est disposé à une distance Y2 de la deuxième boîte collectrice (24) qui est supérieure à 25% de la longueur $L$ des tubes (22).

10. Système de climatisation (1) selon la revendication 9, **caractérisé en ce que** la distance $Y2$ est égale à 63% de la longueur $L$ des tubes (22).

11. Système de climatisation (1) selon l'une quelconque des revendications précédentes, **caractérisé en ce que** ledit dispositif (18) comprend un deuxième capteur de température (31) disposé en une deuxième zone $Z2$ qui est située en aval de l'une des passes $P1,P2$ selon le sens d'écoulement (100) du flux d'air ambiant (11) à travers l'échangeur de chaleur fluide réfrigérant / air ambiant (10).

12. Système de climatisation (1) selon la revendication 11, **caractérisé en ce que** la deuxième zone $Z2$ s'étend depuis la première boîte collectrice (23) jusqu'à la deuxième boîte collectrice (24), la deuxième zone $Z2$ jouxtant un premier bord latéral (28) dudit échangeur de chaleur (10) et la deuxième zone $Z2$ étant d'une largeur $XR$ égale à 60% de la largeur $L1$ de la première passe $P1$.

13. Système de climatisation (1) selon la revendication 12, **caractérisé en ce que** le deuxième capteur de température (31) est placé à une distance $X3$ du premier bord latéral (28) qui équivaut à 30% de la largeur $L1$ de la première passe $P1$.

14. Système de climatisation (1) selon la revendication 11, **caractérisé en ce que** la deuxième zone $Z2$ s'étend entre la ligne de séparation (27) et un deuxième bord latéral (29) dudit échangeur de chaleur (10), la deuxième zone $Z2$ jouxtant la deuxième boîte collectrice (23) et la deuxième zone $Z2$ étant d'une longueur $YR$ égale à 25% de la longueur $L$ des tubes (22).

15. Système de climatisation (1) selon la revendication 14, **caractérisé en ce que** le deuxième capteur de température (31) est placé à une distance $Y3$ de la deuxième boîte collectrice (24) qui équivaut à 12,5% de la longueur $L$ des tubes (22).

16. Méthode pour déterminer un état de givrage d'une surface externe (19) de l'échangeur de chaleur fluide réfrigérant / air ambiant (10) constitutif du système de climatisation (1) selon l'une quelconque des revendications précédentes, **caractérisée en ce que** la méthode comporte une première étape consistant à mesurer une première température $T_1$ du flux d'air ambiant (11) prise en aval de l'échangeur de chaleur fluide réfrigérant / air ambiant (10) selon le sens d'écoulement (100) du flux d'air ambiant (11) à travers l'échangeur de chaleur fluide réfrigérant / air ambiant (10).

17. Méthode selon la revendication 16, **caractérisée en ce que** la méthode comporte une deuxième étape consistant à déduire de ladite température $T_1$ du flux d'air ambiant (11) une enthalpie $E_1$ du flux d'air ambiant (11) en aval dudit échangeur de chaleur (10) selon le sens d'écoulement (100) du flux d'air ambiant (11) à travers ledit échangeur de chaleur (10), pour déterminer une puissance de chauffage $P_{ch}$ de la boucle de climatisation (8) à partir de la relation [1] :

$$P_{ch} = P_{comp}*R_{comp} + R_0*S*V*(E_0 - E_1) \qquad [1]$$

Dans laquelle :

- $P_{comp}$ est une puissance électrique du compresseur (9).
- $R_{comp}$ est un rendement du compresseur (9).
- $R_0$ est la densité de l'air.
- $S$ est une surface frontale dudit échangeur de chaleur (10).
- $V$ est une vitesse du flux d'air ambiant (11) s'écoulant à travers ledit échangeur de chaleur (10).
- $E_0$ est une enthalpie du flux d'air ambiant (11) en amont dudit échangeur de chaleur (10) selon un sens d'écoulement du flux d'air ambiant (11) à travers ledit échangeur de chaleur (10).

18. Méthode selon la revendication 17, **caractérisée en ce que** la méthode comporte une troisième étape consistant à :

- comparer la puissance de chauffage $P_{ch}$ et une puissance de consigne $P_{cons}$,
- en déduire que ladite surface externe (19) est givrée si la relation [2] est vérifiée pendant au moins une première durée seuil $D_{seuil1}$.

$$P_{ch} > P_{cons} + \varepsilon_1 \qquad [2]$$

Dans laquelle :

- $\varepsilon_1$ est une première tolérance.

**19.** Méthode selon la revendication 17, **caractérisée en ce que** la méthode comporte les étapes successives consistant à :

- calculer une température de saturation $T_{sat}$ du fluide réfrigérant FR qui correspond à la puissance de chauffage $P_{ch}$ à partir de la relation [3]

$$T_{sat} = T_{ech} + P_{ch} * (1 + K*(2*Q_{air}*Cp_{air})) / K \qquad [3]$$

Dans laquelle :

- $T_{ech}$ est une température du flux d'air ambiant (11) en amont dudit échangeur de chaleur (10) selon le sens d'écoulement (100) du flux d'air ambiant (11) à travers ledit échangeur de chaleur (10).
- K est une constante,
- $Q_{air}$ est un débit du flux d'air ambiant (11) traversant ledit échangeur de chaleur (10),
- $Cp_{air}$ est une chaleur massique de l'air à pression constante.

- calculer une température de saturation $T_{sat\_ch}$ du fluide réfrigérant FR qui correspond à ladite puissance de consigne $P_{cons}$ à partir de la relation [4] :

$$T_{sat-ch} = T_{ech} + P_{cons} * (1 + K*(2*Q_{air}*Cp_{air})) / K \qquad [4]$$

- comparer $T_{sat}$ et $T_{sat\_ch}$,
- en déduire que ladite surface externe (19) est givrée si la relation [5] est vérifiée pendant au moins une deuxième durée seuil $D_{seuil2}$.

$$T_{sat\_th} > T_{sat\_ch} + \varepsilon_2 \qquad [5]$$

Dans laquelle :

- $\varepsilon_2$ est une deuxième tolérance.

**20.** Méthode selon la revendication 16, **caractérisée en ce que** la méthode comporte les étapes successives consistant à :

- calculer une surface frontale estimée $S_{est}$ dudit échangeur de chaleur (10) à partir de la relation [6] :

$$S_{est} = (P_{th} - P_{comp}*R_{comp}) / (R_o*V*(E_0 - E_1)) \qquad [6]$$

Dans laquelle

- $P_{comp}$ est une puissance électrique du compresseur (9).
- $R_{comp}$ est un rendement du compresseur (9).
- $R_0$ est la densité de l'air.
- V est une vitesse du flux d'air ambiant (11) s'écoulant à travers ledit échangeur de chaleur (10).
- $E_0$ est une enthalpie du flux d'air ambiant (11) en amont dudit échangeur de chaleur (10) selon un sens d'écoulement du flux d'air ambiant (11) à travers ledit échangeur de chaleur (10),

- comparer la surface frontale estimée $S_{est}$ à la surface frontale S dudit échangeur de chaleur (10),
- déduire que ladite surface externe (19) est givrée si la surface frontale estimée $S_{est}$ est inférieure à la surface frontale S pendant au moins une troisième durée seuil $D_{seuil3}$.

**21.** Méthode selon la revendication 16, **caractérisée en ce que** la méthode comporte les étapes successives consistant à :

- calculer une puissance estimée du compresseur $P_{compEst}$ à partir de la relation [6] :

$$P_{compEst} = (P_{cons} - S*R_o*V*(E_0 - E_1)) / R_{comp} \qquad [6]$$

Dans laquelle

- $P_{cons}$ est une puissance de consigne.
- $R_{comp}$ est un rendement du compresseur (9).
- $R_0$ est la densité de l'air.
- S est une surface frontale dudit échangeur de chaleur (10).
- V est une vitesse du flux d'air ambiant (11) s'écoulant à travers ledit échangeur de chaleur (10).
- $E_0$ est une enthalpie du flux d'air ambiant (11) en amont dudit échangeur de chaleur (10) selon un sens d'écoulement du flux d'air ambiant (11) à travers ledit échangeur de chaleur (10).

- comparer la puissance estimée du compresseur $P_{compEst}$ à une puissance réelle du compresseur $P_{compReel}$ mesurée.
- déduire que ladite surface externe (19) est givrée si $P_{compEst}$ est supérieure à $P_{compReel}$ pendant au moins une quatrième durée seuil $D_{seuil4}$ supérieure.

**22.** Méthode selon la revendication 16 pour la mise en œuvre d'un système de climatisation (1) selon l'une quelconque des revendications 11 à 15, **caractérisée en ce que** la méthode comporte une deuxième étape consistant à mesurer une deuxième température $T_2$ du flux d'air ambiant (11) prise en aval de l'échangeur de chaleur fluide réfrigérant / air ambiant (10) selon le sens d'écoulement (100) du flux d'air ambiant (11) à travers l'échangeur de chaleur fluide réfrigérant / air ambiant (10).

**23.** Méthode selon la revendication 22, **caractérisée en ce que** la méthode comporte une troisième étape consistant à calculer une différence $\Delta$ entre la température $T_1$ et la température $T_2$, puis en déduire que la surface externe (19) de l'échangeur de chaleur fluide réfrigérant / air ambiant (10) est givrée si la différence $\Delta$ est supérieure à une valeur seuil $\Delta_{seuil}$ pendant au moins une cinquième durée seuil $D_{seuil5}$.

**Patentansprüche**

**1.** Klimasystem (1), welches eine Heizungs- und/oder Klimaanlage (3) umfasst, die hauptsächlich aus einem Gehäuse (4) besteht und einen Klimakreislauf (8) umfasst, wobei der Klimakreislauf (8) einen im Inneren des Gehäuses (4) befindlichen Wärmetauscher (9), der eine Wärmeübertragung zwischen einem inneren Luftstrom (2) und einem Kältemittel (FR), welches im Inneren des Klimakreislaufs (8) zirkuliert, ermöglicht, und einen Wärmetauscher Kältemittel/Umgebungsluft (10), welcher eine Wärmeübertragung zwischen dem Kältemittel (FR) und einem Strom von Umgebungsluft (11) wie etwa einem Luftstrom außerhalb des Fahrzeugs ermöglicht, umfasst, wobei der Wärmetauscher (10) außerhalb des Gehäuses (4) angeordnet ist, zum Beispiel vorn am Fahrzeug, wobei das Klimasystem (1) eine Vorrichtung zur Kontrolle (18) der Vereisung eines Wärmetauschers Kältemittel/Umgebungsluft (10) umfasst, wobei der Wärmetauscher (10), welcher Bestandteil eines Klimakreislaufs (8) ist, zwei Passagen P1, P2 aufweist, wobei der Wärmetauscher (10) Rohre (22) mit einer Länge L aufweist, welche zwischen einem ersten Sammelkasten (23) und einem zweiten Sammelkasten (24) angeordnet sind, wobei die Rohre (22) in Rohre (22) einer ersten Passage P1 und Rohre (22) einer zweiten Passage P2 aufgeteilt sind, welche durch eine Trennlinie (27) voneinander getrennt sind, wobei die Vorrichtung (18) einen ersten Temperatursensor (20) umfasst, welcher in einem ersten Bereich Z1 angeordnet ist, der sich gegenüber einer der Passagen P1, P2 befindet, wobei der erste Temperatursensor (20) in einem Abstand X1, X2 von der Trennlinie (27) angeordnet ist, **dadurch gekennzeichnet, dass** der Abstand X1, X2 kleiner als 66 % einer jeweiligen Breite L1, L2 der Passage P1, P2 ist, wobei der erste Temperatursensor (20) stromabwärts, in einer Fließrichtung (100) eines Stroms von Umgebungsluft (11) durch den Wärmetauscher Kältemittel/Umgebungsluft (10), des Wärmetauschers Kältemittel/Umgebungsluft (10) angeordnet ist.

**2.** Klimasystem (1) nach dem vorhergehenden Anspruch, **dadurch gekennzeichnet, dass** der Abstand X1, X2 kleiner als 40 % der Breite L1, L2 der Passage P1, P2 ist.

**3.** Klimasystem (1) nach einem der vorhergehenden Ansprüche, **dadurch gekennzeichnet, dass** der Abstand X1, X2 gleich 33 % der Breite L1, L2 der Passage P1, P2 ist.

**4.** Klimasystem (1) nach einem der vorhergehenden Ansprüche, **dadurch gekennzeichnet, dass** der Abstand X1, X2 gleich 20 % der Breite L1, L2 der Passage P1, P2 ist.

**5.** Klimasystem (1) nach einem der Ansprüche 1 bis 3, **dadurch gekennzeichnet, dass** der erste Temperatursensor (20) gegenüber der zweiten Passage P2 angeordnet ist.

**6.** Klimasystem (1) nach einem der Ansprüche 1 bis 4, **dadurch gekennzeichnet, dass** der erste Temperatursensor (20) gegenüber der ersten Passage P1 angeordnet ist.

**7.** Klimasystem (1) nach einem der Ansprüche 1 bis 4 und nach Anspruch 6, **dadurch gekennzeichnet, dass** der erste Temperatursensor (20) in einem Abstand Y1 von dem ersten Sammelkasten (23) angeordnet ist, welcher größer als 20 % der Länge L der Rohre (22) ist.

**8.** Klimasystem (1) nach Anspruch 7, **dadurch gekennzeichnet, dass** der Abstand Y1 gleich 63 % der Länge L der Rohre (22) ist.

**9.** Klimasystem (1) nach einem der Ansprüche 1 bis 5, **dadurch gekennzeichnet, dass** der erste Temperatursensor (20) in einem Abstand Y2 von dem zweiten Sammelkasten (24) angeordnet ist, welcher größer als 25 % der Länge L der Rohre (22) ist.

**10.** Klimasystem (1) nach Anspruch 9, **dadurch gekennzeichnet, dass** der Abstand Y2 gleich 63 % der Länge L der Rohre (22) ist.

**11.** Klimasystem (1) nach einem der vorhergehenden Ansprüche, **dadurch gekennzeichnet, dass** die Vorrichtung (18) einen zweiten Temperatursensor (31) umfasst, der in einem zweiten Bereich Z2 angeordnet ist, welcher sich stromabwärts, in der Fließrichtung (100) des Stroms von Umgebungsluft (11) durch den Wärmetauscher Kältemittel/Umgebungsluft (10), einer der Passagen P1, P2 befindet.

**12.** Klimasystem (1) nach Anspruch 11, **dadurch gekennzeichnet, dass** sich der zweite Bereich Z2 vom ersten Sammelkasten (23) bis zum zweiten Sammelkasten (24) erstreckt, wobei der zweite Bereich Z2 an einen ersten seitlichen Rand (28) des Wärmetauschers (10) angrenzt und der zweite Bereich Z2 eine Breite XR hat, die gleich 60 % der Breite L1 der ersten Passage P1 ist.

**13.** Klimasystem (1) nach Anspruch 12, **dadurch gekennzeichnet, dass** der zweite Temperatursensor (31) in einem Abstand X3 von dem ersten seitlichen Rand (28) angeordnet ist, welcher 30 % der Breite L1 der ersten Passage P1 entspricht.

**14.** Klimasystem (1) nach Anspruch 11, **dadurch gekennzeichnet, dass** sich der zweite Bereich Z2 zwischen der Trennlinie (27) und einem zweiten seitlichen Rand (29) des Wärmetauschers (10) erstreckt, wobei der zweite Bereich Z2 an den zweiten Sammelkasten (23) angrenzt und der zweite Bereich Z2 eine Länge YR hat, die gleich 25 % der Länge L der Rohre (22) ist.

**15.** Klimasystem (1) nach Anspruch 14, **dadurch gekennzeichnet, dass** der zweite Temperatursensor (31) in einem Abstand Y3 vom zweiten Sammelkasten (24) angeordnet ist, welcher 12,5 % der Länge L der Rohre (22) entspricht.

**16.** Verfahren zum Bestimmen eines Vereisungszustands einer Außenfläche (19) des Wärmetauschers Kältemittel/Umgebungsluft (10), der Bestandteil des Klimasystems (1) nach einem der vorhergehenden Ansprüche ist, **dadurch gekennzeichnet, dass** das Verfahren einen ersten Schritt umfasst, der darin besteht, eine erste Temperatur $T_1$ des Stroms von Umgebungsluft (11) zu messen, die stromabwärts, in der Fließrichtung (100) des Stroms von Umgebungsluft (11) durch den Wärmetauscher Kältemittel/Umgebungsluft (10), des Wärmetauschers Kältemittel/Umgebungsluft (10) erfasst wird.

**17.** Verfahren nach Anspruch 16, **dadurch gekennzeichnet, dass** das Verfahren einen zweiten Schritt umfasst, der darin besteht, aus der Temperatur $T_1$ des Stroms von Umgebungsluft (11) eine Enthalpie $E_1$ des Stroms von Umgebungsluft (11) stromabwärts, in der Fließrichtung (100) des Stroms von Umgebungsluft (11) durch den Wärmetauscher (10), des Wärmetauschers (10) abzuleiten, um eine Heizleistung $P_{ch}$ des Klimakreislaufs (8) aus der Beziehung [1] zu bestimmen:

$$P_{ch} = P_{comp} * R_{comp} + R_0 * S * V * (E_0 - E_1) \qquad [1]$$

wobei:

- $P_{comp}$ eine elektrische Leistung des Kompressors (9) ist,
- $R_{comp}$ ein Wirkungsgrad des Kompressors (9) ist,
- $R_0$ die Dichte der Luft ist,
- S eine Vorderfläche des Wärmetauschers (10) ist,
- V eine Geschwindigkeit des Stroms von Umgebungsluft (11) ist, der durch den Wärmetauscher (10) fließt,
- $E_0$ eine Enthalpie des Stroms von Umgebungsluft (11) stromaufwärts, in einer Fließrichtung des Stroms von Umgebungsluft (11) durch den Wärmetauscher (10), des Wärmetauschers (10) ist.

**18.** Verfahren nach Anspruch 17, **dadurch gekennzeichnet, dass** das Verfahren einen dritten Schritt umfasst, der darin besteht:

- die Heizleistung $P_{ch}$ und eine Sollleistung $P_{cons}$ zu vergleichen,
- daraus abzuleiten, dass die Außenfläche (19) vereist ist, falls die Beziehung [2] während wenigstens einer ersten Schwellenwertdauer $D_{seuil1}$ erfüllt ist:

$$P_{ch} > P_{cons} + \varepsilon_1 \qquad [2]$$

wobei:

- $\varepsilon_1$ eine erste Toleranz ist.

**19.** Verfahren nach Anspruch 17, **dadurch gekennzeichnet, dass** das Verfahren die folgenden aufeinander folgenden Schritte umfasst:

- Berechnen einer Sättigungstemperatur $T_{sat}$ des Kältemittels <u>FR</u>, welche der Heizleistung $P_{ch}$ entspricht, aus der Beziehung [3]:

$$T_{sat} = T_{ech} + P_{ch} * (1 + K * (2 * Q_{air} * Cp_{air})) / K \qquad [3]$$

wobei:

- $T_{ech}$ eine Temperatur des Stroms von Umgebungsluft (11) stromaufwärts, in der Fließrichtung (100) des Stroms von Umgebungsluft (11) durch den Wärmetauscher (10), des Wärmetauschers (10) ist,
- K eine Konstante ist,
- $Q_{air}$ eine Durchflussmenge des Stroms von Umgebungsluft (11) ist, der den Wärmetauscher (10) durchquert,
- $Cp_{air}$ eine spezifische Wärme der Luft bei konstantem Druck ist,

- Berechnen einer Sättigungstemperatur $T_{sat\_ch}$ des Kältemittels FR, welche der Sollleistung $P_{cons}$ entspricht, aus der Beziehung [4]:

$$T_{sat\_ch} = T_{ech} + P_{cons} * (1 + K * (2 * Q_{air} * Cp_{air})) / K \qquad [4]$$

- Vergleichen von $T_{sat}$ und $T_{sat\_ch}$,
- Ableiten daraus, dass die Außenfläche (19) vereist ist, falls die Beziehung [5] während wenigstens einer zweiten Schwellenwertdauer $D_{seuil2}$ erfüllt ist:

$$T_{sat\_th} > T_{sat\_ch} + \varepsilon_2 \qquad [5]$$

wobei:

- $\varepsilon_2$ eine zweite Toleranz ist.

20. Verfahren nach Anspruch 16, **dadurch gekennzeichnet, dass** das Verfahren die folgenden aufeinander folgenden Schritte umfasst:

- Berechnen einer geschätzten Vorderfläche $S_{est}$ des Wärmetauschers (10) aus der Beziehung [6]:

$$S_{est} = (P_{th} - P_{comp}*R_{comp})/(R_0*V*(E_0 - E_1)) \qquad [6]$$

wobei:

- $P_{comp}$ eine elektrische Leistung des Kompressors (9) ist,
- $R_{comp}$ ein Wirkungsgrad des Kompressors (9) ist,
- $R_0$ die Dichte der Luft ist,
- V eine Geschwindigkeit des Stroms von Umgebungsluft (11) ist, der durch den Wärmetauscher (10) fließt,
- $E_0$ eine Enthalpie des Stroms von Umgebungsluft (11) stromaufwärts, in einer Fließrichtung des Stroms von Umgebungsluft (11) durch den Wärmetauscher (10), des Wärmetauschers (10) ist,

- Vergleichen der geschätzten Vorderfläche $S_{est}$ mit der Vorderfläche S des Wärmetauschers (10),
- Ableiten daraus, dass die Außenfläche (19) vereist ist, falls während wenigstens einer dritten Schwellenwertdauer $D_{seuil3}$ die geschätzte Vorderfläche $S_{est}$ kleiner als die Vorderfläche S ist.

21. Verfahren nach Anspruch 16, **dadurch gekennzeichnet, dass** das Verfahren die folgenden aufeinander folgenden Schritte umfasst:

- Berechnen einer geschätzten Leistung des Kompressors $P_{compEst}$ aus der Beziehung [6] :

$$P_{compEst} = (P_{cons} - S*R_0*V*(E_0 - E_1))/R_{comp} \qquad [6]$$

wobei:

- $P_{cons}$ eine Sollleistung ist,
- $R_{comp}$ ein Wirkungsgrad des Kompressors (9) ist,
- $R_0$ die Dichte der Luft ist,
- S eine Vorderfläche des Wärmetauschers (10) ist,
- V eine Geschwindigkeit des Stroms von Umgebungsluft (11) ist, der durch den Wärmetauscher (10) fließt,
- $E_0$ eine Enthalpie des Stroms von Umgebungsluft (11) stromaufwärts, in einer Fließrichtung des Stroms von Umgebungsluft (11) durch den Wärmetauscher (10), des Wärmetauschers (10) ist,

- Vergleichen der geschätzten Leistung des Kompressors $P_{compEst}$ mit einer gemessenen tatsächlichen Leistung des Kompressors $P_{compReel}$,
- Ableiten, dass die Außenfläche (19) vereist ist, falls $P_{compEst}$ während wenigstens einer vierten Schwellenwertdauer $D_{seuil4}$ größer als $P_{compReel}$ ist.

22. Verfahren nach Anspruch 16 zum Einsatz eines Klimasystems (1) nach einem der Ansprüche 11 bis 15, **dadurch gekennzeichnet, dass** das Verfahren einen zweiten Schritt umfasst, der darin besteht, eine zweite Temperatur $T_2$ des Stroms von Umgebungsluft (11) zu messen, die stromabwärts, in der Fließrichtung (100) des Stroms von Umgebungsluft (11) durch den Wärmetauscher Kältemittel/Umgebungsluft (10), des Wärmetauschers Kältemittel/Umgebungsluft (10) erfasst wird.

23. Verfahren nach Anspruch 22, **dadurch gekennzeichnet, dass** das Verfahren einen dritten Schritt umfasst, der darin besteht, eine Differenz $\Delta$ zwischen der Temperatur $T_1$ und der Temperatur $T_2$ zu berechnen und anschließend daraus abzuleiten, dass die Außenfläche (19) des Wärmetauschers Kältemittel/Umgebungsluft (10) vereist ist, falls die Differenz $\Delta$ während wenigstens einer fünften Schwellenwertdauer $D_{seuil5}$ größer als ein Schwellenwert $\Delta_{seuil}$ ist.

**Claims**

1. Air conditioning system (1) comprising a heating and/or air conditioning installation (3) principally constituted by a housing (4) and comprising an air conditioning loop (8), the air conditioning loop (8) comprising a heat exchanger (9) located inside the housing (4) allowing a heat transfer between an interior air flow (2) and a coolant fluid (FR) that circulates inside the air conditioning loop (8), a coolant fluid/surrounding air heat exchanger (10) that allows a transfer of heat between the coolant fluid (FR) and a surrounding air flow (11), such as an air flow from outside the vehicle, the heat exchanger (10) being placed outside the housing (4), for example at the front of the vehicle, the air conditioning system (1) comprising a device (18) to control freezing of a coolant fluid/surrounding air heat exchanger (10), said heat exchanger (10) comprising two passes P1, P2 constituting an air conditioning loop (8), said heat exchanger (10) comprising tubes (22) of a length L that are interposed between a first collector box (23) and a second collector box (24), the tubes (22) being distributed as tubes (22) of a first pass P1, and tubes (22) of a second pass P2, which are separated from one another by a separation line (27), said device (18) comprising a first temperature sensor (20) arranged in a first zone Z1 located opposite one of the passes P1, P2, the first temperature sensor (20) being placed at a distance X1, X2 from the separation line (27), **characterized in that** the distance X1, X2 is less than 66% of a respective width L1, L2 of the pass P1, P2, the first temperature sensor (20) being arranged downstream of the coolant fluid/surrounding air heat exchanger (10) in a direction (100) of flow of a surrounding air flow (11) through the coolant fluid/surrounding air heat exchanger (10).

2. Air conditioning system (1) according to the preceding claim, **characterized in that** the distance X1, X2 is less than 40% of the width L1, L2 of the pass P1, P2.

3. Air conditioning system (1) according to either of the preceding claims, **characterized in that** the distance X1, X2 is equal to 33% of the width L1, L2 of the pass P1, P2.

4. Air conditioning system (1) according to any one of the preceding claims, **characterized in that** the distance X1, X2 is equal to 20% of the width L1, L2 of the pass P1, P2.

5. Air conditioning system (1) according to any one of Claims 1 to 3, **characterized in that** the first temperature sensor (20) is arranged facing the second pass P2.

6. Air conditioning system (1) according to any one of Claims 1 to 4, **characterized in that** the first temperature sensor (20) is arranged facing the first pass P1.

7. Air conditioning system (1) according to any one of Claims 1 to 4 and according to Claim 6, **characterized in that** the first temperature sensor (20) is arranged at a distance Y1 from the first collector box (23) that is greater than 20% of the length L of the tubes (22).

8. Air conditioning system (1) according to Claim 7, **characterized in that** the distance Y1 is equal to 63% of the length L of the tubes (22).

9. Air conditioning system (1) according to any one of Claims 1 to 5, **characterized in that** the first temperature sensor (20) is arranged at a distance Y2 from the second collector box (24) that is greater than 25% of the length L of the tubes (22).

10. Air conditioning system (1) according to Claim 9, **characterized in that** the distance Y2 is equal to 63% of the length L of the tubes (22).

11. Air conditioning system (1) according to any one of the preceding claims, **characterized in that** said device (18) comprises a second temperature sensor (31) arranged in a second zone $\underline{Z2}$ located downstream of one of the passes $\underline{P1}$, $\underline{P2}$ in the direction (100) of flow of the surrounding air flow (11) through the coolant fluid/surrounding air heat exchanger (10).

12. Air conditioning system (1) according to Claim 11, **characterized in that** the second zone $\underline{Z2}$ extends from the first collector box (23) as far as the second collector box (24), the second zone $\underline{Z2}$ adjoining a first lateral side (28) of said heat exchanger (10) and the second zone $\underline{Z2}$ being of a width $\underline{XR}$ equal to 60% of the width $\underline{L1}$ of the first pass $\underline{P1}$.

13. Air conditioning system (1) according to Claim 12, **characterized in that** the second temperature sensor (31) is placed at a distance $\underline{X3}$ from the first lateral edge (28) that is equivalent to 30% of the width $\underline{L1}$ of the first pass $\underline{P1}$.

14. Air conditioning system (1) according to Claim 11, **characterized in that** the second zone $\underline{Z2}$ extends between the separation line (27) and a second lateral edge (29) of said heat exchanger (10), the second zone $\underline{Z2}$ adjoining the second collector box (23) and the second zone $\underline{Z2}$ being of a length $\underline{YR}$ equal to 25% of the length $\underline{L}$ of the tubes (22).

15. Air conditioning system (1) according to Claim 14, **characterized in that** the second temperature sensor (31) is placed at a distance $\underline{Y3}$ from the second collector box (24) that is equivalent to 12.5% of the length $\underline{L}$ of the tubes (22).

16. Method for determining a state of freezing of an external surface (19) of the coolant fluid/surrounding air heat exchanger (10) constituting the air conditioning system (1) according to any one of the preceding claims, **characterized in that** the method comprises a first step consisting in measuring a first temperature $T_1$ of the surrounding air flow (11) taken downstream of the coolant fluid/surrounding air heat exchanger (10) in the direction (100) of flow of the surrounding air flow (11) through the coolant fluid/surrounding air heat exchanger (10).

17. Method according to Claim 16, **characterized in that** the method comprises a second step consisting in deducing, from said temperature $T_1$ of the surrounding air flow (11), an enthalpy $E_1$ of the surrounding air flow (11) downstream of said heat exchanger (10) in the direction (100) of flow of the surrounding air flow (11) through said heat exchanger (10) such as to determine a heating power $P_{ch}$ of the air conditioning loop (8) from the relation [1]:

$$P_{ch} = P_{comp}{}^{*}R_{comp} + R_0{}^{*}S{}^{*}V{}^{*}(E_0 - E_1) \qquad [1]$$

in which:

- $P_{comp}$ is an electrical power of the compressor (9).
- $R_{comp}$ is a yield of the compressor (9).
- $R_0$ is the density of the air.
- S is a front surface of said heat exchanger (10).
- V is a speed of the surrounding air flow (11) flowing through said heat exchanger (10).
- $E_0$ is an enthalpy of the surrounding air flow (11) upstream of said heat exchanger (10) in a direction of flow of the surrounding air flow (11) through said heat exchanger (10).

18. Method according to Claim 17, **characterized in that** the method comprises a third step consisting in:

- comparing the heating power $P_{ch}$ and a reference power $P_{cons}$,
- deducing therefrom said external surface (19) is frozen if the relation [2] is verified during at least a first threshold duration $D_{seuil1}$.

$$P_{ch} > P_{cons} + \varepsilon_1 \qquad [2]$$

in which:

- $\varepsilon_1$ is a first tolerance.

19. Method according to Claim 17, **characterized in that** the method comprises the successive steps consisting in:

- calculating a saturation temperature $T_{sat}$ of the coolant fluid $\underline{FR}$ that corresponds to the heating power $P_{ch}$

based on the relation [3]

$$T_{sat} = T_{ech} + P_{ch} * (1 + K*(2*Q_{air}*Cp_{air}))/K \qquad [3]$$

in which:

- $T_{ech}$ is a temperature of the surrounding air flow (11) upstream of said heat exchanger (10) in the direction (100) of flow of the surrounding air flow (11) through said heat exchanger (10).
- K is a constant,
- $Q_{air}$ is a flow rate of the surrounding air flow (11) traversing said heat exchanger (10),
- $Cp_{air}$ is a specific heat of the air at constant pressure.

- calculating a saturation temperature $T_{sat\_ch}$ of the coolant fluid FR that corresponds to said reference power $P_{cons}$ based on the relation [4] :

$$T_{sat-ch} = T_{ech} + P_{cons} * (1 + K*(2*Q_{air}*Cp_{air}))/K \qquad [4]$$

- comparing $T_{sat}$ and $T_{sat\_ch}$,
- deducing therefrom that said external surface (19) is frozen if the relation [5] is verified during at least a second threshold duration $D_{seuil2}$.

$$T_{sat\_th} > T_{sat\_ch} + \varepsilon_2 \qquad [5]$$

in which:

- $\varepsilon_2$ is a second tolerance.

**20.** Method according to Claim 16, **characterized in that** the method comprises the successive steps consisting in:

- calculating an estimated front surface $S_{est}$ of said heat exchanger (10) based on the relation [6]:

$$S_{est} = (P_{th} - P_{comp}*R_{comp})/(R_o*V*(E_0-E_1)) \qquad [6]$$

in which:

- $P_{comp}$ is an electrical power of the compressor (9) .
- $R_{comp}$ is a yield of the compressor (9) .
- $R_0$ is the density of the air.
- V is a speed of the surrounding air flow (11) flowing through said heat exchanger (10).
- $E_0$ is an enthalpy of the surrounding air flow (11) upstream of said heat exchanger (10) in a direction of flow of the surrounding air flow (11) through said heat exchanger (10),

- comparing the estimated front surface $S_{est}$ to the front surface S of said heat exchanger (10),
- deducing that said external surface (19) is frozen if the estimated front surface $S_{est}$ is less than the front surface S during at least a third threshold duration $D_{seuil3}$.

**21.** Method according to Claim 16, **characterized in that** the method comprises the successive steps consisting in:

- calculating an estimated power of the compressor $P_{compEst}$ based on the relation [6] :

$$P_{compEst} = (P_{cons} - S*R_o*V*(E_0-E_1))/R_{comp} \qquad [6]$$

in which:

- $P_{cons}$ is a reference power.
- $R_{comp}$ is a yield of the compressor (9) .
- $R_0$ is the density of the air.
- S is a front surface of said heat exchanger (10) .
- V is a speed of the surrounding air flow (11) flowing through said heat exchanger (10).
- $E_0$ is an enthalpy of the surrounding air flow (11) upstream of said heat exchanger (10) in a direction of flow of the surrounding air flow (11) through said heat exchanger (10),

- comparing the estimated power of the compressor $P_{compEst}$ with a measured actual power $P_{compReel}$ of the compressor,
- deducing that said external surface (19) is frozen if $P_{compEst}$ is greater than $P_{compReel}$ during at least a fourth, longer threshold duration $D_{seuil4}$.

22. Method according to Claim 16, for implementing an air conditioning system (1) according to any one of Claims 11 to 15, **characterized in that** the method comprises a second step consisting in measuring a second temperature $T_2$ of the surrounding air flow (11) taken downstream of the coolant fluid/surrounding air heat exchanger (10) in the direction (100) of flow of the surrounding air flow (11) through the coolant fluid/surrounding air heat exchanger (10).

23. Method according to Claim 22, **characterized in that** the method comprises a third step consisting in calculating a difference $\Delta$ between the temperature $T_1$ and the temperature $T_2$, then in deducing that the external surface (19) of the coolant fluid/surrounding air heat exchanger (10) is frozen if the difference $\Delta$ is greater than a threshold value $\Delta_{seuil}$ during at least a fifth threshold duration $D_{seuil5}$.

Fig.1

EP 2 336 703 B1

Fig.2

EP 2 336 703 B1

Fig.3

EP 2 336 703 B1

Fig.4

EP 2 336 703 B1

Fig.5

EP 2 336 703 B1

EP 2 336 703 B1

Fig.6

Fig.7

EP 2 336 703 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20070289318 A
- US 20020036080 A, Itoh
- FR 2928448